# EUROPÄISCHE PATENTANMELDUNG

(11) **EP 3 006 645 A1**
(43) Veröffentlichungstag der Anmeldung: **13.04.2016**
(21) Anmeldenummer: 15188384.0
(22) Anmeldetag: 05.10.2015
(51) Int. Cl.: E04F 13/16, B27K 3/34, B32B 27/00, B44C 5/04

(54) **PANEEL**

(30) Priorität: 08.10.2014 DE 102014014912; 08.10.2014 DE 102014015354
(71) Anmelder: Ed. Heckewerth Nachf. GmbH & Co. KG, 32120 Hiddenhausen (DE)
(72) Erfinder: Kranz, Udo, 33449 Langenberg (DE)
(74) Vertreter: Thielking & Elbertzhagen Patentanwälte Partnerschaft mbB

(57) **Zusammenfassung**

Das Paneel weist eine selbsttragende Trägerplatte (1) auf, auf welcher wenigstens eine bedruckbare Grundierungsschicht (2) angeordnet ist, wobei die Trägerplatte (1) eine durch Acetylieren vorbehandelte Holzwerkstoffplatte oder eine Faserzement aufweisende Trägerplatte (1) ist. Auf der wenigstens einen Grundierungsschicht (2) ist eine Druckfarbe (3a) aufweisende Druckschicht (3) aufgebracht. Auf der Druckschicht (3) ist wenigstens eine eine Lackierung aufweisende Deckschicht (4) angeordnet. Die wenigstens eine Grundierungsschicht (2) weist eine Lackschicht auf.

## Beschreibung

Die Erfindung betrifft ein Paneel nach dem Oberbegriff des Anspruchs 1.

Aus EP 1 946 287 B1 ist ein als Werbetafel ausgebildetes Paneel bekannt. Dieses ist nichtbrennbar mit einem Träger aus Faserzement ausgebildet, auf welchem eine bedruckbare Acrylatbeschichtung unmittelbar aufgebracht ist. Diese Platte eignet sich jedoch nicht für den Außeneinsatz, da vor Allem Feuchtigkeit und UV-Strahlung die Druckfarbe angreifen und das Druckbild zerstören können.

Bei der Außenanwendung, d.h. bei der Benutzung solcher Paneele im Freien, sorgt die dort zweifellos vorhandene Feuchtigkeit dafür, dass diese in die bedruckte Trägerplatte eindringt. Einmal von den Schmalseiten der Trägerplatte aus, einmal auch von vorne, an den Stellen, an denen der Druck nicht geschützt ist, weil etwa Befestigungsbohrungen in die Platte eingebracht sind. Werden acetylierte Holzwerkstoffplatten verwendet, so bildet sich bei Eindringen von Feuchtigkeit in die Platte eine saure Lösung, die durch die Platte an die Oberfläche diffundiert und dabei die Druckfarbe erreicht. Ebenso bildet sich bei der Verwendung von Faserzementplatten als Trägerplatte für entsprechende Paneele bei Feuchtigkeitseintrag eine alkalische Lösung, die ebenfalls durch die Platte diffundiert und dabei auch die Druckfarbe erreicht.

Alkalische und saure Substanzen greifen die Druckfarbe auf der Platte an oder zerstören sie sogar. Bei den genannten Paneelen besteht also der Bedarf nach Verbesserungen.

Aufgabe der vorliegenden Erfindung ist es, ein für den Außenbereich geeignetes Paneel der eingangs genannten Art zu schaffen, bei welchem die Bedruckung auch in feuchter Umgebung beständig bleibt und insbesondere nicht durch die Diffusion von in der Trägerplatte entstehenden sauren oder alkalischen Lösungen zerstört werden kann.

Gelöst wird diese Aufgabe durch ein Paneel mit den Merkmalen des Anspruchs 1. Vorteilhafte Ausführungsformen finden sich in den Unteransprüchen.

Das erfindungsgemäße Paneel verfügt über eine als acetylierte Holzwerkstoffplatte oder Faserzementplatte ausgebildete Trägerplatte. Diese ist bedruckt, indem auf der wenigstens einen Grundierungsschicht eine eine Druckfarbe aufweisende Druckschicht aufgebracht ist. Die Druckschicht wiederum weist auf deren Oberseite wenigstens eine eine Lackierung aufweisende Deckschicht auf. Die Druckfarbe, bei der es sich vorteilhafterweise um eine UV-härtende Druckfarbe handelt, ist somit zwischen der Grundierungsschicht eingekapselt. Auf diese Weise wird ein Paneel geschaffen, welches sich hervorragend für den Außeneinsatz auch in feuchter Umgebung eignet, denn zum Einen wird die Druckfarbe selbst, zum Anderen wird die Oberfläche der Trägerplatte vor dem Eintrag von Feuchtigkeit geschützt. Die wenigstens eine Grundierungsschicht weist eine Lackschicht auf.

Wie sich gezeigt hat, wirkt diese Versiegelung der Druckfarbe auch dann, wenn das Paneel etwa mit Befestigungsbohrungen versehen wird. Die Grundierung und die Deckschicht verbinden sich so innig miteinander, dass auch bei deren Durchbohrung keine Feuchtigkeit zwischen die beiden Schichten gelangen und den Druck beschädigen kann. Zudem kann im Falle der acetylierten Holzwerkstoffplatte gegenüber herkömmlich verwendeten kunststoffhaltigen Plattenmaterialien das Trägermaterial aus nachwachsenden Rohstoffen bezogen werden und die Entsorgung kann beispielsweise über die thermische Verwertung umweltschonend erfolgen. Zudem lässt sich insbesondere eine acetylierte Holzwerkstoffplatte besonders einfach und zuverlässig insbesondere an der Bau-/Montagestelle be- und verarbeiten. Sie verfügt gegenüber anderen Werkstoffen über ein vergleichsweise niedriges Gewicht und stellt daher geringere Ansprüche an ein Befestigungssystem und lässt sich auch im Großformat leichter transportieren und handhaben.

Insbesondere kann die Grundierungsschicht und/oder die wenigstens eine Deckschicht eine Acrylatschicht, insbesondere einen UV-härtenden Acryllack, aufweisen. Bevorzugt ist vorgesehen, dass die wenigstens eine Grundierungsschicht eine unmittelbar auf die Trägerplatte aufgebrachte Acrylatschicht ist. Dies sorgt gegenüber Feuchtigkeit für ein besonders witterungsbeständiges Schutzsystem und verhindert insbesondere das Eindringen von Feuchtigkeit in den Holzwerkstoff der Trägerplatte, bei der es sich nach einer bevorzugten Ausführungsform um eine acetylierte - und damit auch auf sehr lange Dauer feuchtigkeitsunempfindliche - Holzwerkstoffplatte handelt. Dazu kann neben der Acetylierung auch alternativ oder ergänzend die Trägerplatte durch Hitzebehandlung oder/und Holzvernetzung vorbehandelt sein. Weitere Behandlungen dieser Art können auch sein: Beschichtung und/oder Behandlung mit Silizium, Silikon und/oder Silan und/oder Öl und/oder Wachs. Generell kann die Platte zur Verbesserung der Qualität gegenüber Außeneinflüssen zur Brand- oder Flammenhemmung modifiziert sein.

Eine solche Platte ist dauerhaft formstabil sowie resistent gegenüber Verrottung und Pilzbefall. Neben den versiegelnden Eigenschaften bieten die verwendeten Lacke bzw. Acrylatschichten auch den Vorteil, dass die damit beschichteten Paneele dauerhaft UV-beständig sind, wodurch insbesondere auch ein Ausbleichen der eventuell vorhandenen Pigmente oder des Druckes vermeiden wird. Zudem sind die genannten Beschichtungen stabil gegenüber abrasiven Medien, da sie besonders kratzfest und chemisch unanfällig sind. Nicht zuletzt dadurch können etwa Graffiti oder andere Substanzen von dem Paneel entfernt werden, ohne dass die Oberfläche darunter leidet.

Die Oberfläche des erfindungsgemäßen Paneels lässt sich ggf. auch individuell einfärben. Dazu kann vorgesehen sein, dass die wenigstens eine Grundierungsschicht und/ oder die Druckschicht und/oder die wenigstens eine Deckschicht eine Pigmentierung aufweist.

Das oben beschriebene erfindungsgemäße Paneel eignet sich so insbesondere für die Verwendung als bedruckte Tafel - bei Verwendung der Faserzementplatte insbesondere in brandgefährdeter Umgebung - außerhalb geschlossener Räume, im Freien und/oder in feuchter Umgebung, insbesondere als Werbetafel oder als Fassadenpaneel oder als Möbelbauplatte.

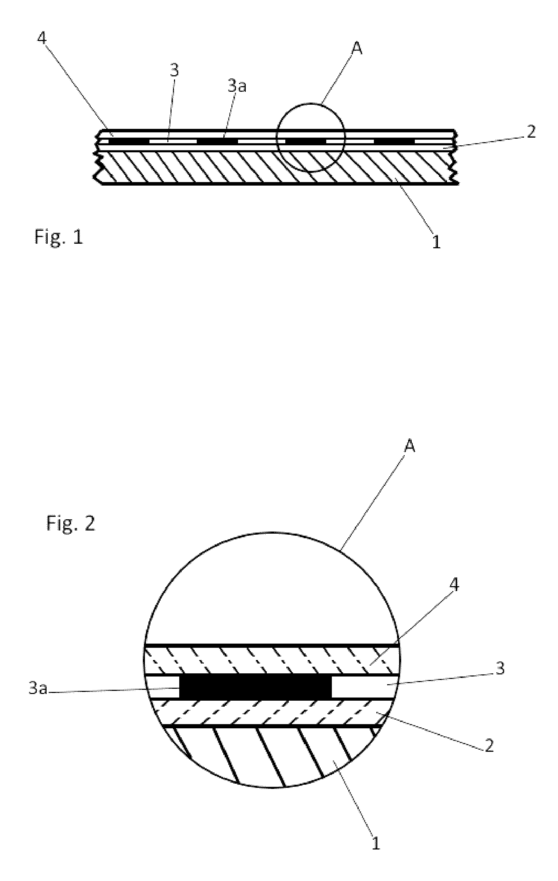

Die Erfindung wird nachfolgend anhand der Figuren 1 und 2 näher erläutert.
Figur 1 zeigt die Schnittansicht eines Teils eines erfindungsgemäßen Paneels.
Figur 2 zeigt eine Vergrößerung des Ausschnitts A aus Figur 1.

Die in den Figuren 1 und 2 gezeigte Schnittdarstellung ist übertrieben gezeichnet, insbesondere ist das Dickenverhältnis der Trägerplatte 1 zu den übrigen Schichten nicht maßstabsgetreu, denn die Schichten 2 bis 4 sind im Verhältnis zur Trägerplatte 1 normalerweise wesentlich dünner.

Die Trägerplatte 1 des Paneels ist aus einem acetylierten Holzwerkstoffoder aus Faserzementwerkstoff hergestellt. Letzterer verfügt über besonders gute Brandschutzeigenschaften. Unmittelbar auf der Oberfläche der Trägerplatte 1 ist wenigstens eine eine Lackschicht aufweisende Grundierungsschicht 2 angeordnet, die bevorzugt einen, insbesondere UV-gehärteten, Acryllack umfasst. Auf der Grundierung 2, die auch aus einer Mehrzahl Schichten aufgebaut sein kann, ist eine Druckschicht 3 vorgesehen, welche vollflächig oder in Abschnitten Druckfarbe 3a aufweist, die bevorzugt eine UV-gehärtete Farbe ist. Auf der Druckschicht 3 ist eine Deckschicht 4 vorgesehen, welche die Druckfarbe der Druckschicht 3 zwischen sich und der Grundierung 2 einkapselt. Auch die Deckschicht 4 weist bevorzugt einen, insbesondere UV-gehärteten, Acryllack auf und kann wie auch die Grundierungsschicht 2 eine Mehrzahl Schichten aufweisen.

Das erfindungsgemäße Paneel weist mit diesem Aufbau eine besonders gute Eignung für Außenanwendungen auf, da zum Einen die Holzwerkstoffplatte oder Faserzementplatte 1 und zum Anderen auch die Druckschicht 3 gegenüber witterungsbedingter Feuchtigkeit unempfindlich und/oder durch den speziellen Aufbau geschützt sind.

## Patentansprüche

1. Paneel, aufweisend eine selbsttragende Trägerplatte (1), auf welcher wenigstens eine bedruckbare Grundierungsschicht (2) angeordnet ist, wobei die Trägerplatte (1) eine durch Acetylieren vorbehandelte Holzwerkstoffplatte oder eine Faserzement aufweisende Trägerplatte (1) ist und auf der wenigstens einen Grundierungsschicht (2) eine Druckfarbe (3a) aufweisende Druckschicht (3) aufgebracht ist und auf der Druckschicht (3) wenigstens eine eine Lackierung aufweisende Deckschicht (4) angeordnet ist,
**dadurch gekennzeichnet,**
**dass** die wenigstens eine Grundierungsschicht (2) eine Lackschicht aufweist.

2. Paneel nach Anspruch 1,
**dadurch gekennzeichnet,**
**dass** die wenigstens eine Grundierungsschicht (2) und/ oder die wenigstens eine Deckschicht (4) eine Acrylatschicht, insbesondere einen UV-härtenden Acryllack, aufweist.

3. Paneel nach einem der vorigen Ansprüche,
**dadurch gekennzeichnet,**
**dass** die wenigstens eine Grundierungsschicht (2) und/ oder die Druckschicht und/oder die wenigstens eine Deckschicht (4) eine Pigmentierung aufweist.

4. Paneel nach einem der vorigen Ansprüche,
**dadurch gekennzeichnet,**
**dass** die wenigstens eine Grundierungsschicht (2) eine unmittelbar auf die Trägerplatte (1) aufgebrachte Acrylatschicht ist.

5. Paneel nach einem der vorigen Ansprüche,
**dadurch gekennzeichnet,**
**dass** die Druckfarbe (3a) eine UV-härtende Druckfarbe ist.

6. Paneel nach einem der vorigen Ansprüche,
**dadurch gekennzeichnet,**
**dass** die Trägerplatte (1) eine zur Brand- und/oder Flammenhemmung vorbehandelte Holzwerkstoffplatte ist.

7. Paneel nach Anspruch 6,
**dadurch gekennzeichnet,**
**dass** die Trägerplatte (1) durch Hitzebehandlung und/ oder Holzvernetzung und/oder mit Silizium und/oder Silan und/oder Silikon und/oder Öl und/oder Wachs vorbehandelt ist.

8. Verwendung eines Paneels nach einem der vorigen Ansprüche als bedruckte Tafel außerhalb geschlossener Räume und/oder in feuchter Umgebung, insbesondere als Werbetafel oder als Fassadenpaneel oder als Möbelbauplatte.
